# EUROPÄISCHE PATENTSCHRIFT

(11) **EP 2 647 320 B1**
(45) Veröffentlichungstag und Bekanntmachung des Hinweises auf die Patenterteilung: **19.03.2014**
(21) Anmeldenummer: 12401057.0
(22) Anmeldetag: 02.04.2012
(51) Int. Cl.: A47J 31/44

(54) **Getränkebereiter mit einem einsetzbaren Flüssigkeitsbehälter**
Beverage preparer with an insertable liquid container
Dispositif de préparation de boissons avec un récipient à liquide insérable

(43) Veröffentlichungstag der Anmeldung: 09.10.2013
(73) Patentinhaber: Miele & Cie. KG, 33332 Gütersloh (DE)
(72) Erfinder: Jungclaus, Dirk, 59302 Oelde (DE); Wüstefeld, Michael, 59555 Lippstadt (DE); van Pels, Ulrich, 33378 Rheda-Wiedenbrück (DE)

(56) Entgegenhaltungen:
- EP-A1- 2 245 969
- WO-A1-2009/027053

## Beschreibung

Die Erfindung betrifft einen Getränkebereiter nach dem Oberbegriff des Patentanspruches 1.

Derartige Getränkebereiter können beispielsweise Espressomaschinen, Kaffeemaschinen, Kaffeeautomaten, Teebereiter, Saftzentrifugen oder ähnliche Geräte beziehungsweise Kombinationen aus den genannten Geräten sein.

Aus der WO 2009/027053 A1 ist zum Beispiel ein Kaffeeautomat als Getränkebereiter bekannt, der eine Tür aufweist und als Einbaugerät in einem Küchenschrank ausgeführt ist. In die Tür kann dabei ein nach außen sichtbarer Flüssigkeitsbehälter lösbar eingesetzt werden. Ein derartiger Flüssigkeitsbehälter ist beispielsweise mit Milch für die Zubereitung eines aus Kaffee und Milch bestehenden Mischgetränkes gefüllt. Der Flüssigkeitsbehälter des in der WO 2009/027053 A1 offenbarten Getränkebereiters befindet sich jedoch türinnenseitig, sodass die Tür zum Wechsel des Flüssigkeitsbehälters geöffnet werden muss. Auf der Innenseite der Tür ist hierfür zur Aufnahme des Flüssigkeitsbehälters eine Aufnahmevorrichtung vorhanden. Darüber hinaus offenbart die genannte Druckschrift, dass der Flüssigkeitsbehälter von außerhalb des Getränkebereiters sichtbar ist beziehungsweise Teile des Flüssigkeitsbehälters sichtbar sind. Dies hat den Vorteil, dass beispielsweise eine optische Sichtkontrolle des Füllstandes des Flüssigkeitsbehälters erfolgen kann. Als nachteilig hat sich jedoch das Erfordernis erwiesen, zum Austausch des Flüssigkeitsbehälters die Tür öffnen zu müssen, da hiermit ein unerwünschter Aufwand verbunden ist.

Andere, bereits im Einsatz befindliche Getränkebereiter sind ebenfalls unbefriedigend in der Handhabung. So ist es beispielsweise üblich, eine Verkaufsverpackung mit Milch neben dem Getränkebereiter aufzustellen und eine Milchleitung in die Verkaufsverpackung einzuführen. Hierbei ist keine visuelle Kontrolle des Füllstandes des Flüssigkeitsbehälters möglich. Darüber hinaus ist diese Lösung aus hygienischen Gründen bedenklich und es besteht die Gefahr, dass der Flüssigkeitsbehälter während der Vorbereitung oder Verwendung umgestoßen wird. Ein weiterer Nachteil besteht darin, dass für den Flüssigkeitsbehälter ein vom Getränkebereiter unabhängiger Platz zur Verfügung stehen muss.

Eine derartige Lösung geht beispielsweise aus der US 5,473,972 hervor. Die Milch wird hierbei nach dem Venturi-Prinzip über eine Steigleitung, die sich innerhalb des Mitbehälters befindet, angesaugt. Der Milchbehälter kann aus dem Getränkebereiter entnommen und zur Vermeidung des Verfalls der in dem Milchbehälter noch vorhandenen Milch in einem Kühlschrank gelagert werden.

Ein weiterer Getränkebereiter zur wahlweisen Herstellung unterschiedlicher Kaffeegetränke geht aus der EP 2 196 118 A1 oder der WO 2009/027053 A1 hervor. Dieser Getränkebereiter weist einen Flüssigkeitsbehälter und ein strömungsleitend mit dem Flüssigkeitsbehälter verbundenes Mehrwegeventil mit einem Gehäuse auf, die zusammen Bestandteile eines Strömungsleitungssystems sind. Das Mehrwegeventil ist mit einem an eine erste Strömungsleitung angeschlossenen Spülstutzen und mit einem an eine zweite Strömungsleitung angeschlossenen Auslassstutzen ausgestattet und weist eine Verstelleinheit zum wahlweisen Öffnen und Verschließen einer oder mehrerer Strömungsleitungen auf. Auf die an dem Mehrwegeventil vorhandenen Stutzen werden bei dieser Lösung Strömungsleitungen aufgesetzt, die zumeist aus flexiblen Schläuchen bestehen.

Die EP 2 245 969 A1 offenbart einen Getränkebereiter mit einer Kopplungsvorrichtung zur Kopplung eines Flüssigkeitsbehälters an den Getränkebereiter. Die Kopplungsvorrichtung ist dabei beweglich ausgebildet derart, dass nach dem Einsetzen des Flüssigkeitsbehälters diese mittels einer geführten Bewegung auf den Deckel des bereits in den Getränkebereiter eingefügten Flüssigkeitsbehälters gedrückt wird, um die dichtende Verbindung bereitzustellen.

Wie dargelegt werden konnte, weisen die bisher bekannten Lösungen unterschiedliche Nachteile auf.

Ein besonderes Problem besteht bei Getränkebereitern darin, dass der Flüssigkeitsbehälter in eine korrespondierende Aufnahmevorrichtung des Getränkebereiters eingesetzt werden muss, da die Anschlussgeometrie des Getränkebereiters und zumindest ein Anschlusselement des Flüssigkeitsbehälters sehr exakt zueinander passen müssen. Hierbei sind nur sehr geringe Toleranzen zulässig, da es ansonsten zu Undichtigkeiten beim Ansaugen der in dem Flüssigkeitsbehälter enthaltenen Flüssigkeiten kommen könnte. Diese engen Toleranzvorgaben führen jedoch zu einem erheblichen fertigungstechnischen Aufwand und damit zu einer Steigerung der Herstellungskosten.

Der Erfindung stellt sich somit das Problem, einen Getränkebereiter zur Verfügung zu stellen, der ein Einsetzen des Flüssigkeitsbehälters von der Frontseite des Gehäuses oder der Tür des Getränkebereiters ermöglicht, ohne dass hierbei enge Toleranzen einzuhalten sind, wodurch sich das Einsetzen des Flüssigkeitsbehälters insgesamt vereinfacht.

Erfindungsgemäß wird dieses Problem durch einen Getränkebereiter mit den Merkmalen des unabhängigen Anspruchs 1 gelöst.

Vorteilhafte Ausgestaltungen und Weiterbildungen der Erfindung ergeben sich aus den nachfolgenden abhängigen Ansprüchen.

Ein Getränkebereiter zur wahlweisen Herstellung unterschiedlicher Getränke, der einen von der Frontseite einer Tür einsetzbaren Flüssigkeitsbehälter und eine Kopplungsvorrichtung aufweist, das strömungsleitend mit dem in den Getränkebereiter eingesetzten Flüssigkeitsbehälter verbunden ist, wozu an der Kopplungsvorrichtung eine Anschlussgeometrie und an dem Flüssigkeitsbehälter ein zu der Anschlussgeometrie passgenau und dichtend mit der Anschlussgeometrie verbindbarer Anschlusselement ausgebildet ist, wurde erfindungsgemäß dahingehend weitergebildet, dass die Kopplungsvorrichtung in dem Getränkebereiter schwimmend gelagert ist. Die Kopplungsvorrichtung kann auch Teil eines anderen Bauteils sein, beispielsweise kann sie in ein sogenanntes Mehrwegventil, wie es beispielsweise in dem Getränkebereiter zum Stellen der Flüssigkeitswege eingesetzt ist, integriert sein.

Die mit der Erfindung erreichbaren Vorteile bestehen hauptsächlich darin, dass die Toleranzen zwischen der Anschlussgeometrie und dem Anschlusselement großzügig gewählt werden können. Beim Einfügen des Flüssigkeitsbehälters in den Getränkebereiter passt sich aufgrund der begrenzten Beweglichkeit die Kopplungsvorrichtung der Orientierung des Flüssigkeitsbehälters an, so dass dieser mit hoher Zuverlässigkeit in die Kopplungsvorrichtung eingeführt werden kann. Mit dieser Lösung reduziert sich der fertigungstechnische Aufwand in erheblichem Maße und das Einsetzen des Flüssigkeitsbehälters in den Getränkebereiter wird für den Anwender entscheidend vereinfacht.

Entsprechend einer ersten Ausgestaltung der Erfindung wird vorgeschlagen, dass die montierte Kopplungsvorrichtung auf Grund der schwimmenden Lagerung in einer Ebene bewegbar ist. Durch diese Maßnahme wird die Bewegbarkeit der Kopplungsvorrichtung auf eine Ebene beschränkt, was der Präzision beim Einsetzen des Flüssigkeitsbehälters in den Getränkebereiter zu Gute kommt, denn die Kopplungsvorrichtung kann nur in dieser Ebene und nicht in mehreren Richtungen im Raum ausweichen.

Bevorzugt ist diese Ebene senkrecht zur Einführungsrichtung des Anschlusselements des Flüssigkeitsbehälters in die Kopplungsvorrichtung ausgerichtet. Mit anderen Worten kann die Kopplungsvorrichtung seitlich ausweichen und sich damit während der Einführung des Flüssigkeitsbehälters optimal an dessen Position anpassen.

Um das Mehrwegeventil auf einfache Weise montieren zu können, wird entsprechend einer Weiterbildung der Erfindung vorgeschlagen, dass zur Fixierung der Kopplungsvorrichtung an der Innenseite der Tür eine Adapterplatte vorhanden ist. Die Adapterplatte kann darüber hinaus jedoch auch weitere Bauteile aufnehmen. Wie eingangs bereits ausgeführt wurde, werden im Rahmen des Strömungsleitungssystems verschiedene flexible Schlauchleitungen innerhalb des Getränkebereiters verlegt. Diese können beispielsweise ohne weiteres mit Hilfe der Adapterplatte fixiert werden.

Zur Fixierung der Kopplungsvorrichtung werden bevorzugt mehrere Halter vorgesehen. Natürlich können diese Halter unmittelbar an der Adapterplatte ausgebildet oder befestigt sein. Neben diesem Umstand ist es ferner möglich, dass die Halter unabhängig von einer Adapterplatte zur Aufnahme der Kopplungsvorrichtung dienen. Sie werden zur Befestigung des Gehäuses der Kopplungsvorrichtung verwendet.

Eine besondere Ausgestaltung der Erfindung ist jedoch auch darin zu sehen, dass die Halter domartig gestaltet sind. Mit der domartigen Gestaltung gelingt hinsichtlich der Stabilität eine optimale und zudem eine Material sparende Ausführung dieser Halter.

Der fertigungstechnische Aufwand lässt sich erheblich reduzieren, wenn gemäß einem weiterführenden Vorschlag die Adapterplatte mit den Haltern als einteiliges Kunststoff-Formteil gestaltet ist. Unter einem einteiligen Kunststoff-Formteil wird im Sinne der Erfindung der Einsatz von Kunststoff oder Kunststoff-Verbundwerkstoffen jeglicher Art verstanden. Diese zeichnen sich durch ein geringes Gewicht, zum Teil durch Schwingungen dämpfende Eigenschaften und stets durch eine lange Lebensdauer sowie durch ihre Lebensmittelneutralität aus.

Zur Verbindung der Kopplungsvorrichtung mit den Haltern wird darüber hinaus vorgeschlagen, dass die Kopplungsvorrichtung an seinem Gehäuse korrespondierend zu jedem der Halter je einen Flansch aufweist. Somit kann die Kopplungsvorrichtung über seine Flansche unmittelbar an den Haltern befestigt werden, wobei die Befestigung auf unterschiedliche Weise erfolgen kann. Gedacht ist hierbei nur beispielhaft an Führungen, die eine Beweglichkeit der Kopplungsvorrichtung in einer Ebene gestatten. Es ist lediglich zu berücksichtigen, dass die schwimmende Lagerung bei dieser Verbindung bestehen bleibt.

Entsprechend einer konkreten Ausführungsvariante wird davon ausgegangen, dass die Flansche je eine Bohrung aufweisen, deren Durchmesser größer ist, als der Schaft eines mit den Haltern verbindbaren Verbindungselementes und dass der Kopf jedes dieser Verbindungselemente größer ist, als die Bohrung im Flansch der Kopplungsvorrichtung. Auf diese sehr einfache Weise kann einerseits eine Befestigung der Kopplungsvorrichtung in dem Getränkebereiter, insbesondere an der Adapterplatte, erfolgen und ferner eine schwimmende Lagerung umgesetzt werden, ohne zusätzliche konstruktive oder bauliche Maßnahmen vorsehen zu müssen.

Als Verbindungselemente können bevorzugt Schrauben oder Niete Verwendung finden, wobei Schrauben den Vorteil haben, dass dadurch eine lösbare Verbindung geschaffen wird, so dass erforderlichenfalls ein Auswechseln der Kopplungsvorrichtung möglich bleibt.

Da die Bohrungen im Flansch der Kopplungsvorrichtung größer ausgeführt sind, als der Schaft des Verbindungselementes, kann es hilfreich sein, wenn zwischen dem Kopf der Verbindungselemente und der korrespondierenden Oberfläche des Flansches zusätzlich eine Unterlegscheibe angeordnet ist. Die Unterlegscheibe stellt dabei eine vergrößerte Auflagefläche für den Kopf des Verbindungselementes dar.

Erfindungsgemäß ist ferner vorgesehen, dass die Anschlussgeometrie der Kopplungsvorrichtung als ein Anschlussstutzen und der Verbindungsflansch des Flüssigkeitsbehälters als korrespondierender Anschlusszapfen ausgebildet ist oder umgekehrt, die Anschlussgeometrie ein Anschlusszapfen und das Anschlusselement ein korrespondierender Anschlussstutzen ist. Mit anderen Worten sind die Anschlussgeometrie und das Anschlusselement passend zueinander ausgeführt, unabhängig davon an welchem der miteinander korrespondierenden Elemente sie sich befinden.

Zur Verbesserung der Reinigung des Flüssigkeitsbehälters und um den Flüssigkeitsbehälter zu befüllen beziehungsweise zu entleeren, ist es von Vorteil, wenn der Flüssigkeitsbehälter einen Deckel aufweist. An diesem Deckel kann bevorzugt zugleich die Anschlussgeometrie beziehungsweise das Anschlusselement ausgebildet sein. Der Deckel ist ebenfalls als einteiliges Kunststoff-Formteil herstellbar, so dass in diesem Fall die entsprechende Anschlussgeometrie beziehungsweise das Anschlusselement unmittelbar am Deckel angeformt wird. Auch durch diese Maßnahme lässt sich der fertigungstechnische Aufwand zur Herstellung eines erfindungsgemäßen Getränkebereiters reduzieren.

Darüber hinaus wird auch vorgeschlagen, dass eine in dem Flüssigkeitsbehälter vorhandene Steigleitung unmittelbar in die Anschlussgeometrie beziehungsweise in das Anschlusselement des Flüssigkeitsbehälters mündet. Somit kann der Flüssigkeitsbehälter direkt in die Kopplungsvorrichtung eingesetzt werden, so dass die Strömungsleitung unmittelbar aus dem Flüssigkeitsbehälter in das Strömungsleitungssystem erfolgt.

Von besonderem Vorteil ist es ferner, wenn der Flüssigkeitsbehälter hängend in eine in der Tür oder einem Gehäusevorsprung des Getränkebereiters vorhandene Aufnahmevorrichtung eingesetzt ist. Da der Flüssigkeitsbehälter beispielsweise von der Frontseite der Tür in den Getränkebereiter eingesetzt wird, müsste er eigentlich auf einer hier vorhandenen Abtropfplatte abgestellt werden, die zumeist aus Aluminium oder Edelstahl hergestellt ist und daher bei häufigem Wechsel des Flüssigkeitsbehälters dazu neigen könnte, zerkratzt zu werden. Die hängende Aufnahme des Flüssigkeitsbehälters vermeidet diese Nachteile auf einfache Weise, da der Flüssigkeitsbehälter nicht mit der Abtropfplatte in Kontakt kommt.

Die Erfindung wird nachfolgend anhand der beigefügten Zeichnungen näher erläutert. Das gezeigte Ausführungsbeispiel stellt keine Einschränkung auf die dargestellte Variante dar, sondern dient lediglich der Erläuterung eines Prinzips der Erfindung. Dabei sind gleiche oder gleichartige Bauteile mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: einen Schnitt durch den Deckel eines in eine Kopplungsvorrichtung eingesetzten Flüssigkeitsbehälters eines Getränkebereiters,
- Figur 2:: eine Adapterplatte als Einzelteil in räumlicher Darstellung,
- Figur 3:: eine Adapterplatte als Einzelteil mit darauf montierter Kopplungsvorrichtung,
- Figur 4:: einen Blick auf die Innenseite einer Tür eines Getränkebereiters
und
- Figur 5:: eine Ansicht der Frontseite einer Tür mit eingesetztem Flüssigkeitsbehälter.

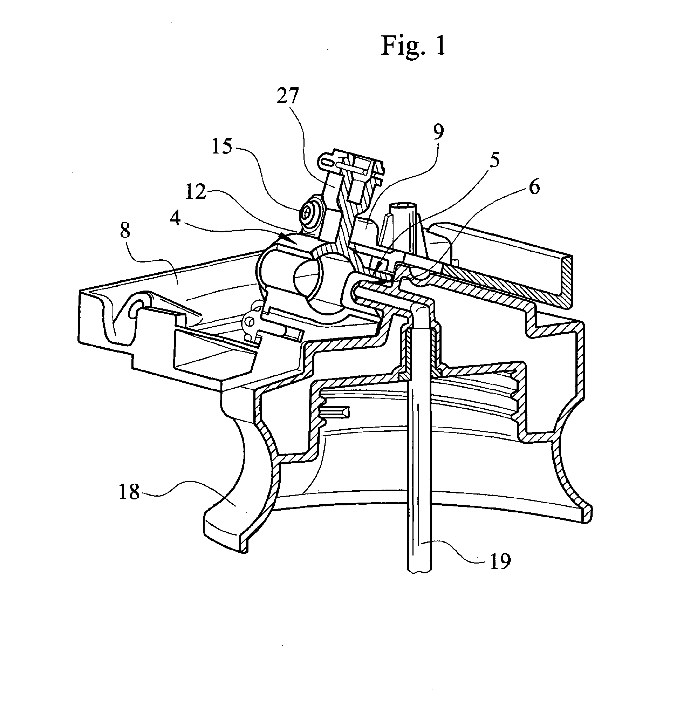

Aus der Figur 1 geht eine Schnittdarstellung hervor, die in schematisch vereinfachter Weise den oberen Teil eines Flüssigkeitsbehälters zeigt. Der Flüssigkeitsbehälter weist einen Deckel 18 auf, der mit dem Korpus des Flüssigkeitsbehälters über ein Gewinde verbunden ist. Dieses Gewinde ist in der Figur 1 andeutungsweise erkennbar. Innerhalb des Flüssigkeitsbehälters befindet sich eine Steigleitung 19 über die in dem Flüssigkeitsbehälter enthaltene Flüssigkeit angesaugt und in eine Kopplungsvorrichtung 4, die in dem dargestellten Beispiel in ein Mehrwegeventil 4 integriert ist, abgegeben wird. Die nachfolgenden Erläuterungen beziehen sich zwar beispielhaft auf ein Mehrwegventil, sie gelten jedoch gleichbedeutend für den Einsatz einer Koppelvorrichtung im allgemeineren Sinne. Ferner beziehen sich alle Positions- oder Richtungsangaben auf die betriebsgemäße Aufstellposition oder Einbauposition des Getränkebereiters. Die Steigleitung 19 mündet dabei unmittelbar in einen am Deckel 18 des Flüssigkeitsbehälters angeformten Verbindungsflansch 6. Der Verbindungsflansch 6 dient einer dichtenden und strömungsleitenden Verbindung mit dem Mehrwegeventil 4, weshalb er unmittelbar in eine korrespondierende Anschlussgeometrie 5 des Mehrwegeventils 4 eingeschoben ist. Das Mehrwegeventil 4 ist seinerseits in einer korrespondierenden Aufnahme einer Adapterplatte 8 eingesetzt und weist die Besonderheit auf, dass es schwimmend gelagert ist. Diese schwimmende Lagerung wird durch mehrere Flansche am Mehrwegeventil 4 erreicht, von denen in der Figur 1 lediglich der Flansch 12 dargestellt ist. Dieser Flansch 12 des Mehrwegeventils 4 weist eine Durchgangsbohrung auf, deren Durchmesser größer ist, als der Schaft des Verbindungselementes 15 zur Befestigung des Mehrwegeventils 4 an einem domartigen Halter 9. Durch die schwimmende Lagerung des Mehrwegeventils 4 gestaltet sich das Ineinanderfügen des Verbindungsflansches 6 am Deckel 18 des Flüssigkeitsbehälters und der Anschlussgeometrie 5 des Mehrwegeventils 4 sehr einfach, da das Mehrwegeventil 4 eine Ausweichbewegung in einer Ebene quer zur Einführungsrichtung des Verbindungsflansches 6 vollziehen kann. Somit findet zwischen den beiden ineinander zu fügenden Bauteilen eine Art Selbstjustierung statt. Die Toleranzen können damit großzügig gehalten werden, so dass sich die Fertigung insgesamt wesentlich vereinfacht.

Der Halter 9 ist bei der gezeigten Ausführungsvariante einstückig an der Adapterplatte 8 angeformt, wobei das gesamte Bauelement als einteiliges Kunststoff-Formteil hergestellt wurde. Als Verbindungselement 15 dient im vorliegenden Fall eine Schraube, wobei zwischen dem Kopf der Schraube 15 und der Oberfläche des Flansches 12 des Mehrwegeventils 4 eine Unterlegscheibe vorgesehen ist, die jedoch aus der Darstellung der Figur 1 nicht detailliert hervorgeht. Das Mehrwegeventil 4 verfügt ferner über mehrere, an sich bekannte Strömungsleitungsanschlüsse, von denen in der Zeichnung beispielhaft ein Strömungsleitungsanschluss 27 dargestellt ist. Bei dem Strömungsleitungsanschluss 27 handelt es sich vorliegend um einen Spülstutzen.

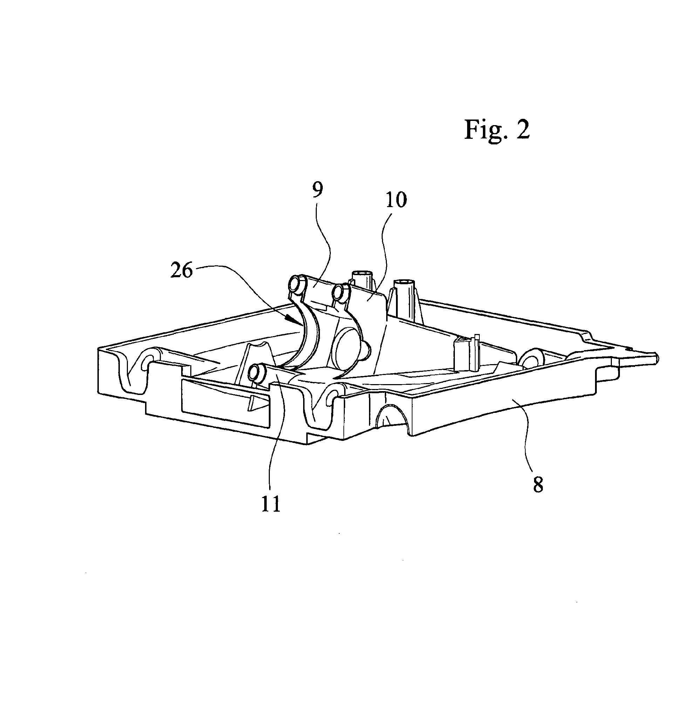

Die Figur 2 zeigt in einer räumlichen Ansicht die Adapterplatte 8 als Einzelteil ohne irgendwelche Anbauten. Hieraus wird ersichtlich, dass die Adapterplatte 8 insgesamt als ein einteiliges Kunststoff-Formteil hergestellt ist und etwa mittig eine Aufnahmegeometrie 26 zum Einsetzen eines Mehrwegeventils aufweist. Darüber hinaus sind im Bereich der Aufnahmegeometrie 26 insgesamt drei Halter 9, 10, 11 angeformt, deren Kontur domartig gestaltet ist. Diese Halter 9, 10, 11 dienen der bevorzugt lösbaren Befestigung des Mehrwegeventils.

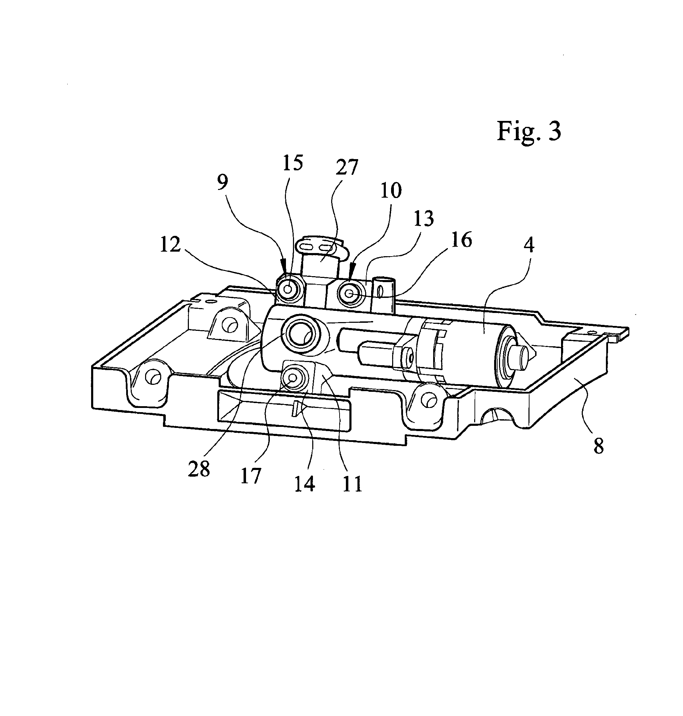

Schließlich veranschaulicht die Darstellung in Figur 3 eine Adapterplatte 8 mit darauf montiertem Mehrwegeventil 4 als eine Baueinheit. An dem Mehrwegeventil 4 sind korrespondierend zu den Haltern 9, 10, 11 Flansche 12, 13, 14 vorhanden, in die Durchgangsbohrungen eingebracht sind. Diese Durchgangsbohrungen weisen einen Durchmesser auf, der größer ist, als die zur Befestigung an den Haltern 9, 10, 11 durch die Durchgangsbohrungen hindurchgeführten Schäfte der Verbindungselemente 15, 16, 17, bei denen es sich vorliegend um Schrauben handelt. Auf diese einfache Weise wird eine schwimmende Lagerung des Mehrwegeventils 4 erreicht. Zwischen den Schraubenköpfen und der Oberfläche der Flansche 12, 13, 14 sind bei diesem Beispiel ferner nicht näher bezeichnete Unterlegscheiben vorhanden. Das Mehrwegeventil 4 verfügt neben dem bereits erwähnten Strömungsanschluss 27 über einen weiteren Strömungsanschluss 28, bei dem es sich im vorliegenden Fall um einen Auslassstutzen handelt.

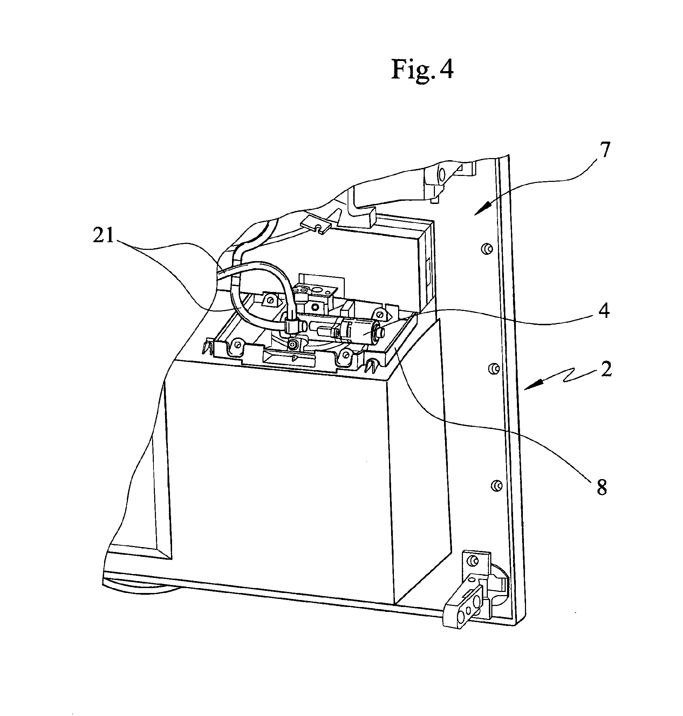

Zur Verdeutlichung der Einbausituation zeigt die Figur 4 die Innenseite 7 einer Tür 2 eines Getränkebereiters nach der Erfindung. Hier befindet sich die Adapterplatte 8 mit dem darauf montierten Mehrwegeventil 4 oberhalb der Rückseite eines im Anschluss noch näher zu beschreibenden Ausgabebereiches 22. Das Mehrwegeventil 4 ist über flexible Strömungsleitungen 21 an einem Strömungsleitungssystem des Getränkebereiters angebunden.

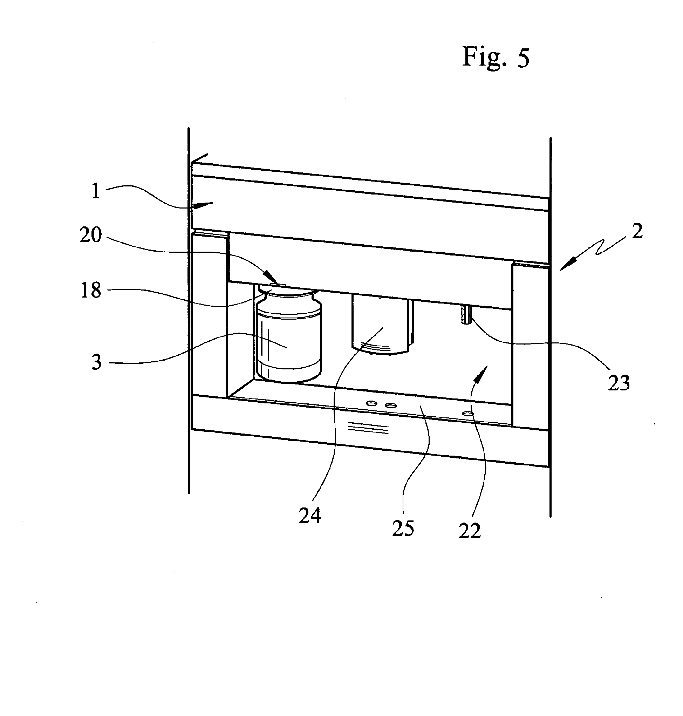

Betrachtet man die Figur 5, so ist hier der Getränkebereiter in einer perspektivischen Ansicht von der Vorderseite skizziert. Hierbei ist die zuvor bereits im Zusammenhang mit der Beschreibung der Figur 4 genannte Tür 2 von ihrer Frontseite 1 her zu erkennen. Die Tür 2 weist einen Ausgabebereich 22 auf, der als muldenartige Vertiefung ausgeführt ist. In diesem Ausgabebereich 22 ist eine einzelne Ausgabedüse 23, wie sie beispielsweise zur Abgabe von Wasserdampf oder Heißwasser bei einem Kaffeeautomaten verwendet werden kann, vorhanden. Darüber hinaus befindet sich in dem Ausgabebereich 22 eine Ausgabeeinheit 24, wie sie bei Kaffeeautomaten in an sich bekannter Weise zur Abgabe des erzeugten Kaffeegetränkes dient. Ein Flüssigkeitsbehälter 3 ist bei dieser Ausführung eines Getränkebereiters hängend innerhalb des Ausgabebereiches 22 aufgenommen. Er kann somit in einfacher und vorteilhafter Weise bei geschlossener Tür 2 von der Frontseite 1 der Tür 2 her eingesetzt beziehungsweise entnommen werden. Zur Halterung des Flüssigkeitsbehälters 3 dient dabei eine in der Figur 5 nur andeutungsweise dargestellte Aufnahmevorrichtung 20, in die ein passender Teil des Deckels 18 des Flüssigkeitsbehälters 3 eingeschoben werden kann. Unterhalb des Flüssigkeitsbehälters 3 beziehungsweise der Ausgabeeinheit 24 oder der Ausgabedüse 23 weist der Ausgabebereich 22 eine Abtropfplatte 25 auf, die zur Abführung eventuell übergelaufener oder abtropfender Flüssigkeiten dient. Zur Aufnahme dieser Flüssigkeitsreste ist in an sich bekannter Weise unterhalb der Abtropfplatte 25 eine Auffangwanne vorhanden.

### BEZUGSZEICHENLISTE:

- 1: Frontseite der Tür
- 2: Tür
- 3: Flüssigkeitsbehälter
- 4: Mehrwegeventil / Kopplungsvorrichtung
- 5: Anschlussgeometrie
- 6: Anschlusselement
- 7: Innenseite der Tür
- 8: Adapterplatte
- 9: Halter
- 10: Halter
- 11: Halter
- 12: Flansch
- 13: Flansch
- 14: Flansch
- 15: Verbindungselemente
- 16: Verbindungselemente
- 17: Verbindungselemente
- 18: Deckel
- 19: Steigleitung
- 20: Aufnahmevorrichtung
- 21: Strömungsleitung
- 22: Ausgabebereich
- 23: Ausgabedüse
- 24: Ausgabeeinheit
- 25: Abtropfplatte
- 26: Aufnahmegeometrie
- 27: Strömungsanschluss
- 28: Strömungsanschluss

## Patentansprüche

1. Getränkebereiter zur wahlweisen Herstellung unterschiedlicher Getränke, aufweisend einen von der Frontseite (1) einsetzbaren Flüssigkeitsbehälter (3) und eine geräteseitige Kopplungsvorrichtung (4), die strömungsleitend mit dem in oder an den Getränkebereiter eingesetzten Flüssigkeitsbehälter (3) verbunden ist, wozu an der Kopplungsvorrichtung (4) eine Anschlussgeometrie (5) und an dem Flüssigkeitsbehälter (3) ein zu der Anschlussgeometrie (5) passgenau und dichtend mit der Anschlussgeometrie (5) verbindbares Anschlusselement (6) ausgebildet ist,
**dadurch gekennzeichnet, dass**
die Kopplungsvorrichtung (4) in dem Getränkebereiter schwimmend gelagert ist, derart, dass beim Einfügen des Flüssigkeitsbehälters in den Getränkebereiter aufgrund der begrenzten Beweglichkeit der Kopplungsvorrichtung sich die Kopplungsvorrichtung der Orientierung des Flüssigkeitsbehälters anpassen kann.

2. Getränkebereiter nach Anspruch 1,
**dadurch gekennzeichnet, dass**
die montierte Kopplungsvorrichtung (4) auf Grund der schwimmenden Lagerung in einer Ebene bewegbar ist.

3. Getränkebereiter nach Anspruch 2,
**dadurch gekennzeichnet, dass**
die Ebene senkrecht zur Einführungsrichtung des Anschlusselements (6) des Flüssigkeitsbehälters (3) in die Kopplungsvorrichtung (4) ausgerichtet ist.

4. Getränkebereiter nach einem der vorstehend genannten Ansprüche,
**dadurch gekennzeichnet, dass**
zur Fixierung der Kopplungsvorrichtung (4) an der Innenseite (7) einer Gehäusewand oder Tür (2) eine Adapterplatte (8) vorhanden ist.

5. Getränkebereiter nach einem der vorstehend genannten Ansprüche,
**dadurch gekennzeichnet, dass**
zur Fixierung der Kopplungsvorrichtung (4) mehrere Halter (9, 10, 11) vorhanden sind.

6. Getränkebereiter nach Anspruch 5,
**dadurch gekennzeichnet, dass**
die Halter (9, 10, 11) domartig gestaltet sind.

7. Getränkebereiter nach einem der Ansprüche 4 bis 6,
**dadurch gekennzeichnet, dass**
die Adapterplatte (8) mit den Haltern (9, 10, 11) als einteiliges Kunststoff-Formteil gestaltet ist.

8. Getränkebereiter nach einem der Ansprüche 4 bis 7,
**dadurch gekennzeichnet, dass**
die Kopplungsvorrichtung (4) an ihrem Gehäuse korrespondierend zu jedem der Halter (9, 10, 11) je einen Flansch (12, 13, 14) aufweist.

9. Getränkebereiter nach Anspruch 8,
**dadurch gekennzeichnet, dass**
die Flansche (12, 13, 14) je eine Bohrung aufweisen, deren Durchmesser größer ist, als der Schaft eines mit den Haltern (9, 10, 11) verbindbaren Verbindungselementes (15, 16, 17) und dass der Kopf jedes dieser Verbindungselemente (15, 16, 17) größer ist, als die Bohrung im Flansch (12, 13, 14) der Kopplungsvorrichtung (4).

10. Getränkebereiter nach Anspruch 9,
**dadurch gekennzeichnet, dass**
die Verbindungselemente (15, 16, 17) Schrauben oder Niete sind.

11. Getränkebereiter nach Anspruch 9 oder 10,
**dadurch gekennzeichnet, dass**
zwischen dem Kopf der Verbindungselemente (15, 16, 17) und der korrespondierenden Oberfläche des Flansches (12, 13, 14) eine Unterlegscheibe angeordnet ist.

12. Getränkebereiter nach einem der vorstehend genannten Ansprüche,
**dadurch gekennzeichnet, dass**
die Anschlussgeometrie (5) der Kopplungsvorrichtung (4) als ein Anschlussstutzen und das Anschlusselement (6) des Flüssigkeitsbehälters (3) als korrespondierender Anschlusszapfen ausgebildet ist oder umgekehrt, die Anschlussgeometrie (5) ein Anschlusszapfen und der Anschlusselement (6) ein korrespondierender Anschlussstutzen ist.

13. Getränkebereiter nach einem der vorstehend genannten Ansprüche,
**dadurch gekennzeichnet, dass**
der Flüssigkeitsbehälter (3) einen Deckel (18) aufweist, an dem die Anschlussgeometrie (5) beziehungsweise das Anschlusselement (6) ausgebildet ist.

14. Getränkebereiter nach einem der vorstehend genannten Ansprüche,
**dadurch gekennzeichnet, dass**
eine in dem Flüssigkeitsbehälter (3) vorhandene Steigleitung (19) unmittelbar in die Anschlussgeometrie (5) beziehungsweise in das Anschlusselement (6) des Flüssigkeitsbehälters (3) mündet.

15. Getränkebereiter nach einem der vorstehend genannten Ansprüche,
**dadurch gekennzeichnet, dass**
der Flüssigkeitsbehälter (3) hängend in einen Gehäusevorsprung oder in der Tür (2) des Getränkebereiters vorhandene Aufnahmevorrichtung (20) eingesetzt ist.

## Claims

1. Beverage preparation machine for selectively producing various beverages, comprising a liquid container (3) which can be inserted from the front (1) and an appliance-side coupling device (4) which is connected in a flow-conducting manner to the liquid container (3), which is inserted into or onto the beverage preparation machine, for which purpose a connection geometry (5) is formed on the coupling device (4) and a connection element (6) is formed on the liquid container (3), which connection element can be connected to the connection geometry (5) with an exact fit with the connection geometry (5) and in a sealing manner,
**characterised in that**
the coupling device (4) is mounted so as to float in the beverage preparation machine in such a way that, due to the limited mobility of the coupling device, the coupling device can adapt to the orientation of the liquid container when the liquid container is inserted into the beverage preparation machine.

2. Beverage preparation machine according to claim 1,
**characterised in that**
the assembled coupling device (4) is movable in a plane owing to it being mounted in a floating manner.

3. Beverage preparation machine according to claim 2,
**characterised in that**
the plane is oriented perpendicular to the direction in which the connection element (6) of the liquid container (3) is inserted into the coupling device (4).

4. Beverage preparation machine according to any of the preceding claims,
**characterised in that**
an adapter plate (8) is provided on the inner face (7) of a housing wall or door (2) for fixing the coupling device (4).

5. Beverage preparation machine according to any of the preceding claims,
**characterised in that**
a plurality of holders (9, 10, 11) are provided for fixing the coupling device (4).

6. Beverage preparation machine according to claim 5,
**characterised in that**
the holders (9, 10, 11) are dome-like.

7. Beverage preparation machine according to any of claims 4 to 6,
**characterised in that**
the adapter plate (8) is a plastics moulded part that is integral with the holders (9, 10, 11).

8. Beverage preparation machine according to any of claims 4 to 7,
**characterised in that**
the coupling device (4) comprises flanges (12, 13, 14) on its housing which each correspond to one of the holders (9, 10, 11).

9. Beverage preparation machine according to claim 8,
**characterised in that**
the flanges (12, 13, 14) each comprise a hole of which the diameter is larger than the shank of a fastener (15, 16, 17) which can be connected to the holders (9, 10, 11), and **in that** the head of each of these fasteners (15, 16, 17) is larger than the hole in the flange (12, 13, 14) of the coupling device (4).

10. Beverage preparation machine according to claim 9,
**characterised in that**
the fasteners (15, 16, 17) are screws or rivets.

11. Beverage preparation machine according to either claim 9 or claim 10,
**characterised in that**
a washer is arranged between the head of the fasteners (15, 16, 17) and the corresponding surface of the flange (12, 13, 14).

12. Beverage preparation machine according to any of the preceding claims,
**characterised in that**
the connection geometry (5) of the coupling device (4) is formed as a connection piece and the connection element (6) of the liquid container (3) is formed as a corresponding connection pin, or vice versa **in that** the connection geometry (5) is a connection pin and the connection element (6) is a corresponding connection piece.

13. Beverage preparation machine according to any of the preceding claims,
**characterised in that**
the liquid container (3) comprises a lid (18) on which the connection geometry (5) and the connection element (6) are formed.

14. Beverage preparation machine according to any of the preceding claims,
**characterised in that**
a riser (19) provided in the liquid container (3) discharges directly into the connection geometry (5) and into the connection element (6) of the liquid container (3)

15. Beverage preparation machine according to any of the preceding claims,
**characterised in that**
the liquid container (3) is inserted in a suspended manner into a housing projection or into a socket (20) provided in the door (2) of the liquid container.

## Revendications

1. Préparateur de boissons pour la réalisation au choix de différentes boissons, présentant un réservoir de liquide (3) pouvant être introduit à partir du côté avant (1) et un dispositif de couplage (4) côté appareil qui est raccordé en transport d'écoulement au réservoir de liquide (3) introduit dans ou sur le préparateur de boissons, et à cet effet une géométrie de raccordement (5) est constituée sur le dispositif de couplage (4), et un élément de raccordement (6) est constitué sur le réservoir de liquide (3) et peut être raccordé de façon ajustée à la géométrie de raccordement (5) avec précision et de façon étanche avec la géométrie de raccordement (5),
**caractérisé en ce que**
le dispositif de couplage (4) est supporté de façon flottante dans le préparateur de boissons de telle sorte que, lors de l'insertion du réservoir de liquide dans le préparateur de boissons, le dispositif de couplage peut, en raison de la mobilité limitée du dispositif de couplage, s'adapter à l'orientation du réservoir de liquide.

2. Préparateur de boissons selon la revendication 1,
**caractérisé en ce que**
le dispositif de couplage (4) monté est mobile dans un plan en raison de la mise sur palier flottante.

3. Préparateur de boissons selon la revendication 2,
**caractérisé en ce que**
le plan est orienté perpendiculairement au sens d'introduction de l'élément de raccordement (6) du réservoir de liquide (3) dans le dispositif de couplage (4).

4. Préparateur de boissons selon une des revendications précédentes,
**caractérisé en ce**
**qu'**il existe une plaque d'adaptation (8) sur le côté intérieur (7) d'une paroi de logement ou d'une porte (2) pour la fixation du dispositif de couplage (4).

5. Préparateur de boissons selon une des revendications précédentes,
**caractérisé en ce**
**qu'**il existe plusieurs éléments de retenue (9, 10, 11) pour la fixation du dispositif de couplage (4).

6. Préparateur de boissons selon la revendication 5,
**caractérisé en ce que**
les éléments de retenue (9, 10, 11) sont constitués en forme de dôme.

7. Préparateur de boissons selon une des revendications 4 à 6,
**caractérisé en ce que**
la plaque d'adaptation (8) est constituée en tant que partie moulée en matière plastique d'un seul tenant avec les éléments de retenue (9, 10, 11).

8. Préparateur de boissons selon une des revendications 4 à 7,
**caractérisé en ce que**
le dispositif de couplage (4) présente sur son logement respectivement une bride (12, 13, 14) d'une façon qui correspond à chacun des éléments de retenue (9, 10, 11).

9. Préparateur de boissons selon la revendication 8,
**caractérisé en ce que**
les brides (12, 13, 14) présentent chacune un alésage dont le diamètre est plus grand que la tige d'un élément de fixation (15, 16, 17) pouvant être raccordé aux éléments de retenue (9, 10, 11), et **en ce que** la tête de chacun de ces éléments de fixation (15, 16, 17) est plus grande que l'alésage dans la bride (12, 13, 14) du dispositif de couplage (4).

10. Préparateur de boissons selon la revendication 9,
**caractérisé en ce que**
les éléments de fixation (15, 16, 17) sont des vis ou des rivets.

11. Préparateur de boissons selon la revendication 9 ou 10,
**caractérisé en ce**
**qu'**une rondelle est disposée entre la tête des éléments de fixation (15, 16, 17) et la surface correspondante de la bride (12, 13, 14).

12. Préparateur de boissons selon une des revendications précédentes,
**caractérisé en ce que**
la géométrie de raccordement (5) du dispositif de couplage (4) est constituée en tant que tubulure de raccordement et l'élément de raccordement (6) du réservoir de liquide (3) est constitué en tant que tenon de raccordement correspondant, ou inversement **en ce que** la géométrie de raccordement (5) est un tenon de raccordement et l'élément de raccordement (6) est une tubulure de raccordement correspondante.

13. Préparateur de boissons selon une des revendications précédentes,
**caractérisé en ce que**
le réservoir de liquide (3) présente un couvercle (18) sur lequel est constitué(e) la géométrie de raccordement (5) ou respectivement l'élément de raccordement (6).

14. Préparateur de boissons selon une des revendications précédentes,
**caractérisé en ce**
**qu'**une colonne montante (19) présente dans le réservoir de liquide (3) débouche directement dans la géométrie de raccordement (5) ou respectivement dans l'élément de raccordement (6) du réservoir de liquide (3).

15. Préparateur de boissons selon une des revendications précédentes,
**caractérisé en ce que**
le réservoir de liquide (3) est introduit en suspension dans une saillie de logement ou dans un dispositif de réception (20) présent dans la porte (2) du préparateur de boissons.
